(19) Europäisches Patentamt / European Patent Office / Office européen des brevets

(11) **EP 4 787 693 A1**

(12) **EUROPEAN PATENT APPLICATION**
published in accordance with Art. 153(4) EPC

(43) Date of publication:
**05.08.2026 Bulletin 2026/32**

(21) Application number: **23954116.2**

(22) Date of filing: **25.09.2023**

(51) International Patent Classification (IPC):
*H02M 1/08* (2006.01)

(52) Cooperative Patent Classification (CPC):
**H02M 1/08**

(86) International application number:
**PCT/JP2023/034703**

(87) International publication number:
**WO 2025/069136 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Astemo, Ltd.**
**Chiyoda-ku,**
**Tokyo 1000004 (JP)**

(72) Inventors:
• **KOMORIYAMA, Keishi**
  **Chiyoda-ku, Tokyo 1000004 (JP)**
• **DOI, Masahiro**
  **Chiyoda-ku, Tokyo 1000004 (JP)**

(74) Representative: **MERH-IP Matias Erny Reichl
Hoffmann
Patentanwälte PartG mbB
Paul-Heyse-Straße 29
80336 München (DE)**

(54) **GATE DRIVE DEVICE AND POWER CONVERSION DEVICE**

(57)    A gate drive device that drives a gate-driven semiconductor element includes: a constant voltage circuit that discharges a gate of the semiconductor element with a constant voltage and ends a discharging operation before an inter-main terminal voltage of the semiconductor element reaches a predetermined value; and a constant current circuit that starts discharging the gate with a constant current after the constant voltage circuit starts discharging with a constant voltage and continuously discharges the gate with a constant current even after the constant voltage circuit ends the discharging operation.

FIG. 1

EP 4 787 693 A1

**Description**

Technical Field

The present invention relates to a gate drive device and a power conversion device.

Background Art

In recent years, a driver configuration has been reviewed in order to reduce a switching loss of a power device such as a power semiconductor. As a result, the present inventors have found that it is effective to reduce the switching loss by configuring the driver with a constant voltage circuit and a constant current circuit and performing turn-on by the constant voltage circuit and turn-off by the constant current circuit. When the driver is configured in this manner, if the constant current circuit is used as it is, the turn-off time from when the gate of the semiconductor element starts to be turned off until the gate is completely turned off becomes long. As a result, the conduction loss during the turn-off time of the gate increases, and the PWM (Pulse Width Modulation) controllability deteriorates, so that the turn-off time needs to be shortened.

Conventionally, as a gate drive device that drives a gate of a power semiconductor, a device using a current mirror circuit system and a device using a feedback system are known. In the current mirror circuit system, a large current flows from the gate of the semiconductor element at the moment of turn-off, and the amount of current can be reduced stepwise. The current mirror circuit system can operate at high speed, but the cost of an integrated circuit (IC) constituting the gate drive device is high, and it has been difficult to adjust the amount of current to be reduced from the gate. In the feedback system, the control value can be switched by feeding back the discharge current from the gate to the amplifier. The feedback system is an inexpensive system in which the discharge current from the gate is easily adjusted, but the operation delay until the discharge current is generated is large.

Patent Literature 1 describes a configuration of a gate drive device using both a constant voltage circuit and a constant current circuit. For example, Patent Literature 1 describes as a "gate drive device capable of suppressing variation in switching speed due to variation in Vth and mirror voltage in plurality of switching devices drived by gate driving device and minimizing variation in loss".

Citation List

Patent Literature

PTL 1: JP 2009-011049 A

Summary of Invention

Technical Problem

In the gate drive device described in Patent Literature 1, after the constant current circuit discharges from the gate with a constant current, the constant voltage circuit discharges from the gate with a constant voltage. Since the operation of the constant voltage circuit is high speed while the operation of the constant current circuit is low speed, the turn-off time of the semiconductor element cannot be shortened.

The present invention has been made in view of such a situation, and an object of the present invention is to shorten a turn-off time of a semiconductor element by a gate drive device.

Solution to Problem

A gate drive device according to the present invention drives a gate-driven semiconductor element. The gate drive device includes a constant voltage circuit that discharges a gate of a semiconductor element with a constant voltage and ends a discharging operation before a voltage between main terminals of the semiconductor element reaches a predetermined value, and a constant current circuit that starts discharging the gate with a constant current after the constant voltage circuit starts discharging with a constant voltage and continuously discharges the gate with a constant current even after the constant voltage circuit ends the discharging operation.

Advantageous Effects of Invention

According to the present invention, since a large amount of discharge current is output from the gate of the semiconductor element by the constant voltage circuit and then the discharge current is output by the constant current circuit, the turn-off time of the semiconductor element can be shortened.

Problems, configurations, and effects other than those described above will be clarified by the following description of embodiments.

Brief Description of Drawings

[FIG. 1] FIG. 1 is a diagram illustrating an overall configuration example of a gate drive device according to a first embodiment of the present invention.

[FIG. 2] FIG. 2 is a diagram illustrating an example of a discharge current discharged from a gate of the semiconductor element according to the first embodiment of the present invention.

[FIG. 3] FIG. 3 is a timing chart illustrating an example of operation timing in each unit of the gate drive device according to the first embodiment of the present invention.

[FIG. 4] FIG. 4 is a diagram illustrating a state of change in a discharge current of a gate of the semiconductor element according to the first embodiment of the present invention.

[FIG. 5] FIG. 5 is a diagram illustrating an operation example of a conventional gate drive device.

[FIG. 6] FIG. 6 is a diagram illustrating an operation example of the gate drive device according to the first embodiment of the present invention.

[FIG. 7] FIG. 7 is a diagram illustrating an example in which a mirror period is used for the operation of the gate drive device according to the first embodiment of the present invention.

[FIG. 8] FIG. 8 is a diagram illustrating an example in which the timing at which the constant voltage discharge period of the gate drive device according to the first embodiment of the present invention is switched to the constant current discharge period is set to a time point at which the gate voltage is less than the gate voltage threshold.

[FIG. 9] FIG. 9 is a diagram illustrating an overall configuration example of a gate drive device according to a second embodiment of the present invention.

[FIG. 10] FIG. 10 is a timing chart illustrating an example of operation timing in each unit of the gate drive device according to the second embodiment of the present invention.

[FIG. 11] FIG. 11 is a diagram illustrating an overall configuration example of a gate drive device according to a third embodiment of the present invention.

[FIG. 12] FIG. 12 is a timing chart illustrating an example of operation timing in each unit of the gate drive device according to the third embodiment of the present invention.

[FIG. 13] FIG. 13 is a diagram illustrating an overall configuration example of a gate drive device according to a fourth embodiment of the present invention.

[FIG. 14] FIG. 14 is a timing chart of a gate drive device according to the fourth embodiment of the present invention.

[FIG. 15] FIG. 15 is a modified example of the timing chart of the gate drive device according to the fourth embodiment of the present invention.

[FIG. 16] FIG. 16 is a diagram illustrating an overall configuration example of a motor-driving inverter device according to a fifth embodiment of the present invention.

Description of Embodiments

Hereinafter, embodiments of the present invention will be described with reference to the accompanying drawings. In the present specification and the drawings, components having substantially the same function or configuration are denoted by the same reference numerals, and redundant description is omitted. The present invention is applicable to, for example, an inverter device.

[First Embodiment]

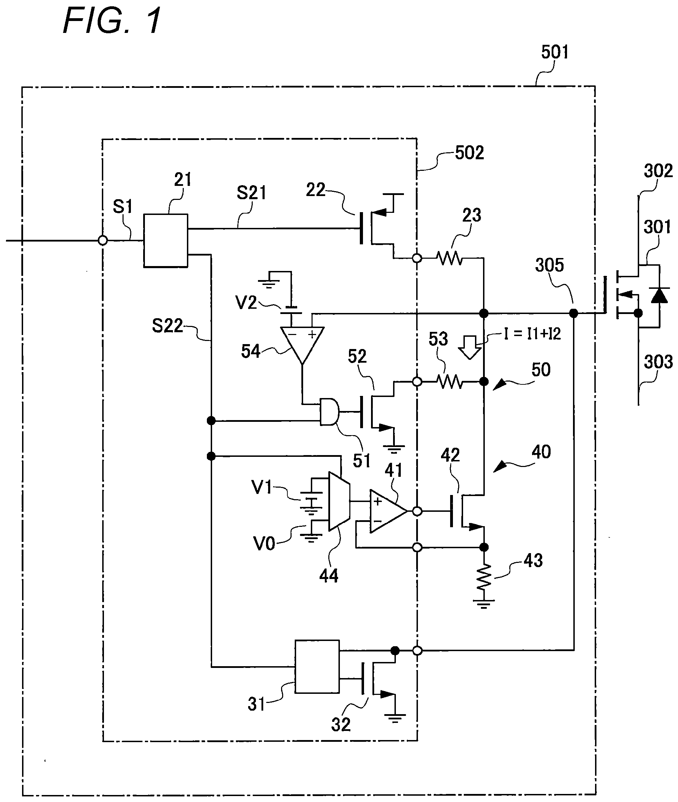

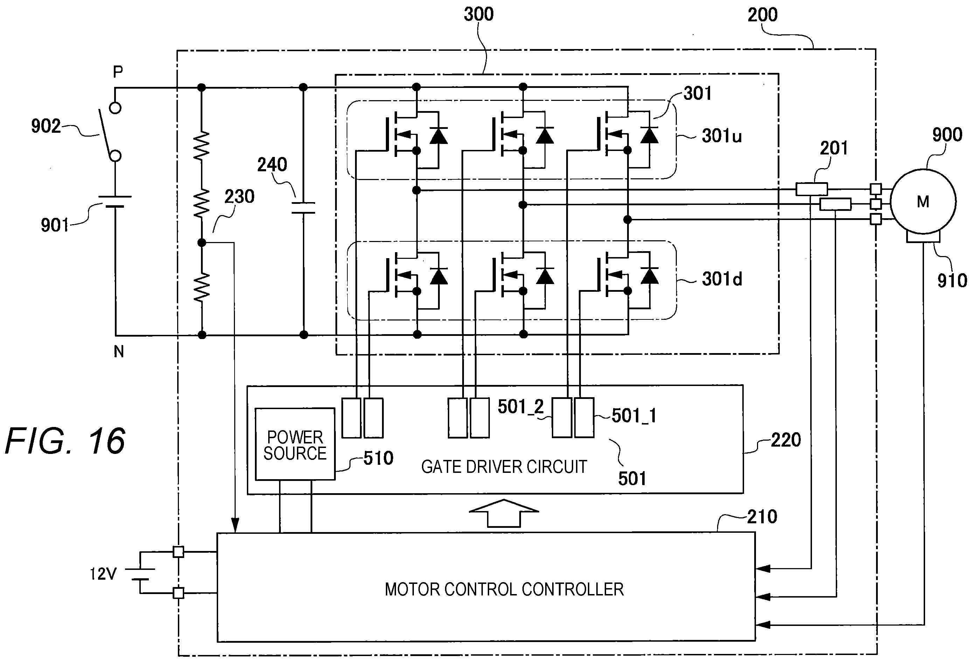

FIG. 1 is a diagram illustrating an overall configuration example of a gate drive device 501 according to a first embodiment. The gate drive device (gate drive device 501) drives a gate-driven semiconductor element (semiconductor element 301). In the following description, in a case where the gate drive devices 501 are configured as a pair, the gate drive device 501 that drives a semiconductor element 301 illustrated in FIG. 1 is referred to as an own arm, and the gate drive device 501 (not illustrated) that forms a pair with the own arm is referred to as a paired arm. Specific examples of the own arm and the other arm are illustrated in FIG. 16 described later.

The semiconductor element 301 is an example of a power semiconductor device used for an inverter or the like. As the semiconductor element 301, for example, an enhancement type N-channel metal-oxide-semiconductor field effect transistor (MOSFET) is used. In FIG. 1, the description of the connection destination of the drain and the source of the semiconductor element 301 is omitted. The gate 305 of the semiconductor element 301 is connected to a circuit configured inside the gate drive device 501. The drain terminal of the semiconductor element 301 is referred to as a main terminal 302, and the source terminal is referred to as a main terminal 303. The voltage applied between the main terminals 302 and 303 is referred to as an inter-main terminal voltage $V_{ds}$, and the current flowing between the main terminals 302 and 303 is referred to as an inter-main terminal current $I_d$.

The gate drive device 501 includes a semiconductor integrated circuit 502, a resistor 23, a transistor 42, and resistors 43 and 53. The semiconductor integrated circuit 502 is an example of a circuit included in the gate drive device according to the first embodiment. The semiconductor integrated circuit 502 includes a control circuit 21, a switch 22, a control circuit 31, a mirror clamp circuit 32, an operational amplifier 41, a selector circuit 44, a control circuit 51, a switch 52, and a comparator 54.

The switch 52 and the resistor 53 constitute a constant voltage circuit 50 that discharges the gate 305 with a constant voltage. The constant voltage circuit (constant voltage circuit 50) discharges the gate (gate 503) of the semiconductor element (semiconductor element 301) with a constant voltage via the resistor 53, and ends the discharging operation before the inter-main terminal voltage of the semiconductor element (semiconductor element 301) reaches a predetermined value.

The control circuit 21 is connected to a control device (not illustrated) disposed outside the gate drive device 501. The control circuit 21 is connected to the switch 22, the control circuit 31, the selector circuit 44, and the control circuit 51. A control signal S1 for instructing on or off of the semiconductor element 301 is input to the control circuit 21. When the control signal S1 is input from the control device, the control circuit 21 outputs a control signal S21 to the gate of the switch 22. In addition, the control circuit 21 outputs a control signal S22 to the control circuit 31, the selector circuit 44, and the control circuit 51. When the control signal S1 is an ON instruction, the control circuit 21 outputs a control signal S21 for an ON instruction and a control signal S22 for an OFF instruction. When the control signal S1 is an OFF instruction, the control circuit 21 outputs a control signal S21 for an OFF instruction and a control signal S22 for an ON instruction.

The switch 22 is, for example, a P-channel MOSFET, and has a source grounded, a drain connected to the resistor 23, and a gate connected to the control circuit 21. The switch 22 is turned on when the control signal S1 output from the control circuit 21 is an ON instruction, and is turned off when the control signal S1 is an OFF instruction. The switch 22 in the ON state holds the semiconductor element 301 in the ON state via the resistor 23.

The control circuit 31 is connected to the gate 305 and the gate of the mirror clamp circuit 32. The control circuit 31 drives the mirror clamp circuit 32 based on the control signal S22.

The mirror clamp circuit 32 is, for example, an N-channel MOSFET, and has a drain connected to the gate 305 and an output terminal of the mirror clamp circuit 32, a source grounded, and a gate connected to the control circuit 31. When the control signal S1 is an ON instruction based on the control signal S22, the mirror clamp circuit 32 turns off the mirror clamp operation according to the output of the control circuit 31. On the other hand, when the control signal S1 is an OFF instruction based on the control signal S22, the mirror clamp circuit 32 can perform the mirror clamp operation according to the output of the control circuit 31.

The constant current circuit 40 includes an operational amplifier 41, a transistor 42, a resistor 43, and a selector circuit 44. The constant current circuit (constant current circuit 40) starts discharging the gate (gate 503) with a constant current after the constant voltage circuit (constant voltage circuit 50) starts discharging with a constant voltage, and continues to discharge the gate with a constant current even after the constant voltage circuit (constant voltage circuit 50) ends the discharging operation. For example, the constant current circuit 40 discharges the gate 305 with a constant current by a negative feedback operation.

The transistor 42 is, for example, an N-channel MOSFET, and has a drain connected to the gate 305, a source grounded via the resistor 43, and a gate connected to the output terminal of the operational amplifier 41. The emitter of the transistor 42 is connected to an inverting input terminal of the operational amplifier 41.

The selector circuit 44 switches the constant current output. An output terminal of the selector circuit 44 is connected to a non-inverting input terminal of the operational amplifier 41. Reference voltages V1 and V0 of the negative feedback operation are input to the selector circuit 44. The reference voltage V1 corresponds to turning on the constant current operation, and the reference voltage V0 corresponds to turning off the constant current operation. The selector circuit 44 switches the reference voltages V1 and V0 in accordance with a control signal S22 output from the control circuit 21. The selector circuit 44 selects the reference voltage V0 that is an output off level when the control signal S1 is an on instruction, and selects the reference voltage V1 that is a predetermined level when the control signal S1 is an off instruction.

The current value of the current output from the constant current circuit 40 is determined by the following Formula (1).

(Reference voltage value selected by selector circuit 44)/(Resistance value of resistor 43)... (1)          (1)

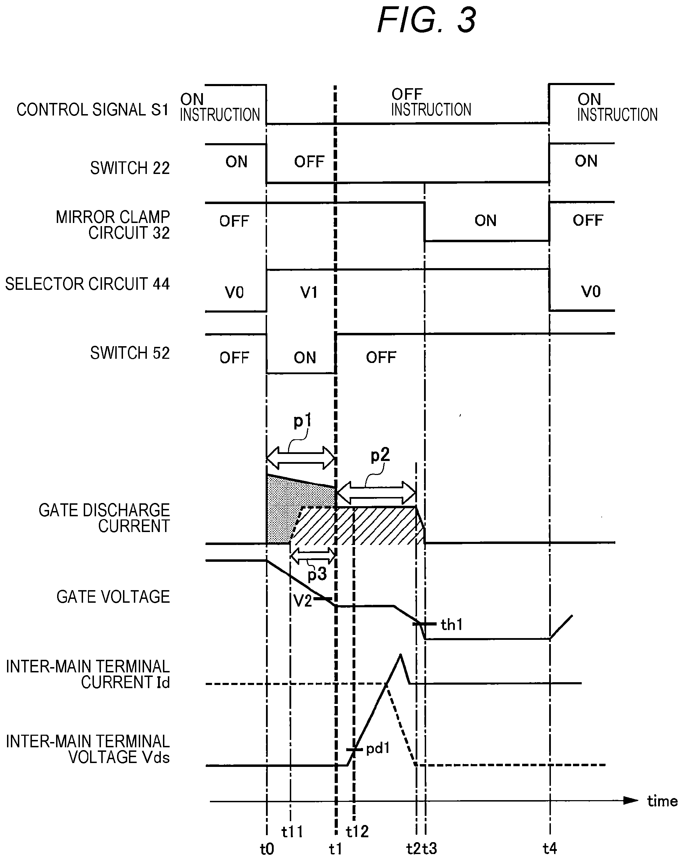

The switch 52 is, for example, an N-channel MOSFET, and has a drain connected to the gate 305 via the resistor 53, a source grounded, and a gate connected to the control circuit 51. The switch 52 is a part of a constant voltage circuit that discharges the gate 305 with a constant voltage. The comparator 54 compares the gate voltage of the gate 305 with a gate voltage threshold V2 (see FIG. 3 described later), and outputs the comparison result when the gate voltage is higher than the gate voltage threshold V2.

The control circuit 51 is a logical product (AND) circuit that drives the gate of the switch 52 when the output of the comparator 54 and the control signal S22 are input. The operation in which the switch 52 is turned on and the constant voltage circuit 50 starts discharging with a constant voltage is referred to as pre-discharge.

The switch 52 is used as a pre-discharge circuit that ends the discharging operation with a constant voltage before the inter-main terminal voltage Vds of the semiconductor element 301 reaches a predetermined value pd1 (see FIG. 3 described later) according to the operation of the control circuit 51. The switch 52 is turned off when the control signal S1 is an ON instruction. On the other hand, the switch 52 is turned on when the control signal S1 is an OFF instruction and when the gate voltage is higher than the gate voltage threshold V2.

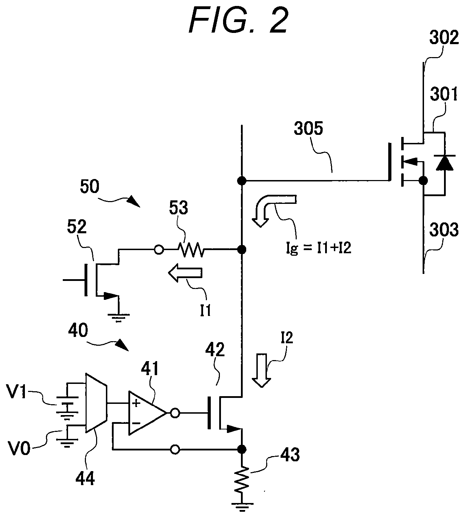

FIG. 2 is a diagram illustrating an example of a discharge current discharged from the gate 305 of the semiconductor element 301. FIG. 2 is an enlarged view of the constant voltage circuit 50 and the constant current circuit 40.

A discharge current Ig of the gate 305 is calculated by adding a discharge current I1 and a discharge current I2. The discharge current I1 is discharged from the constant voltage circuit 50 when the constant voltage circuit 50 is in the on state. The discharge current I2 is discharged from the constant current circuit 40 when the constant current circuit 40 is in the on state.

FIG. 3 is a timing chart illustrating an example of operation timing in each unit of the gate drive device 501 according to the first embodiment.

A timing t0 represents a time point at which the control signal S1 switches from the on instruction to the off instruction. At a time point of timing t0, the switch 22 is switched from on to off, and the switch 22 continues the off state. The selector circuit 44 switches the reference voltage V0 to the reference voltage V1 at timing t0, and the switch 52 is switched from off to on. By the operation of the switches 22 and 52 and the selector circuit 44, the switch 52 starts discharging the gate 305 with a constant voltage before the constant current circuit 40 starts constant current discharging by negative feedback operation. When the gate 305 is discharged, the gate voltage of the gate 305 decreases.

A timing t1 represents a time point after the gate voltage becomes less than the gate voltage threshold V2. At a time point of timing t1, the switch 52 is switched from on to off, so that the discharging operation with a constant voltage by the constant voltage circuit 50 ends. That is, the constant voltage circuit (constant voltage circuit 50) ends the discharging operation when the gate voltage of the semiconductor element (semiconductor element 301) becomes less than the gate voltage threshold. A period during which pre-discharge is performed with a constant voltage is a constant voltage discharge period p1 from timing t0 to timing t1. When the switch 52 is turned off, the constant current circuit 40 starts discharging with the constant current from timing t1.

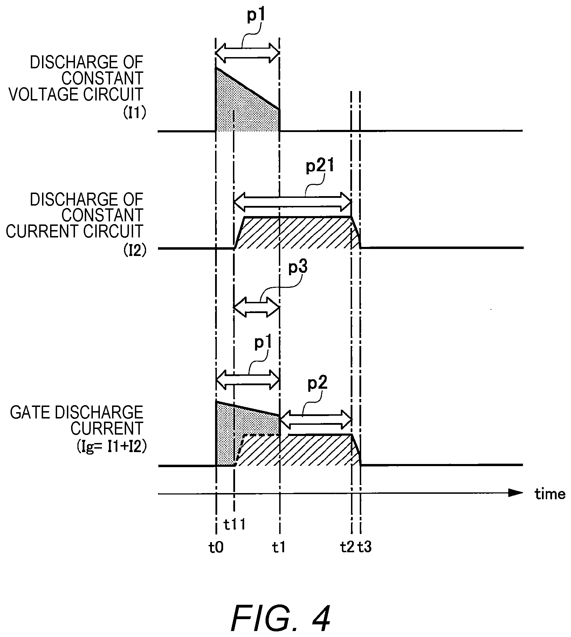

A timing t2 represents a time point when the discharge with the constant current by the constant current circuit 40 ends. In the constant current discharge period p2 from the timing t1 to the timing t2, the inter-main terminal voltage Vds increases by discharging at a constant current, and the inter-main terminal current Id decreases. Although the constant current discharge period strictly corresponds to the period p21 as illustrated in FIG. 4 to be described later, in the present specification, a part of the period p21 that does not overlap with the constant voltage discharge period p1 is referred to as a constant current discharge period p2 for convenience.

A timing t3 represents a time point when the mirror clamp circuit 32 is turned on after the gate voltage drops less than a gate voltage threshold th1. At timing t3, the discharge by the constant current circuit 40 ends. When the mirror clamp circuit 32 is turned on at timing t3, the turn-off operation of the semiconductor element 301 ends. That is, the turn-off time of the semiconductor element 301 is a time from timing t0 to timing t3. When the turn-off operation of the semiconductor element 301 ends, the gate voltage is held at the off-level until timing t4.

A timing t4 represents a time point when the control signal S1 switches from the OFF instruction to the ON instruction. At timing t4, the switch 22 is switched from off to on, and the mirror clamp circuit 32 is switched from on to off. The selector circuit 44 switches the reference voltage V1 to the reference voltage V0, and the switch 52 maintains the off state. In addition, the gate voltage starts increasing.

FIG. 4 is a diagram illustrating how the discharge current at the gate of the semiconductor element 301 changes. In FIG. 4, how the discharge current of the gate changes will be described focusing on timing t0 to timing t2.

The constant voltage circuit 50 starts discharging with the constant voltage from timing t0 and continues discharging until timing t1. In the constant voltage discharge period p1 in which the constant voltage circuit 50 discharges the discharge current I1, the discharge current I1 gradually decreases.

The constant current circuit 40 starts discharging with a constant current from timing t11 and continues discharging until timing t2. The timing t11 is between the timing t0 and the timing t1. In a constant current discharge period p21 in which the constant current circuit 40 discharges the discharge current I2, the discharge current I2 is a constant value. Here, the period p3 from the timing t11 to the timing t1 is an overlap period in which the discharge of the constant voltage circuit 50 and the discharge of the constant current circuit 40 overlap.

The discharge current Ig of the gate 305 is calculated by adding the discharge current I2 to the discharge current I1. The period of discharge from the gate 305 is a length obtained by adding a constant current discharge period p2 for discharging the gate with a constant current to a constant voltage discharge period p1 in which the constant voltage circuit 50 performs discharging. A phenomenon in which the constant voltage circuit 50 performs discharging in the constant voltage discharge period p1 including the overlap period p3 is referred to as pre-discharge.

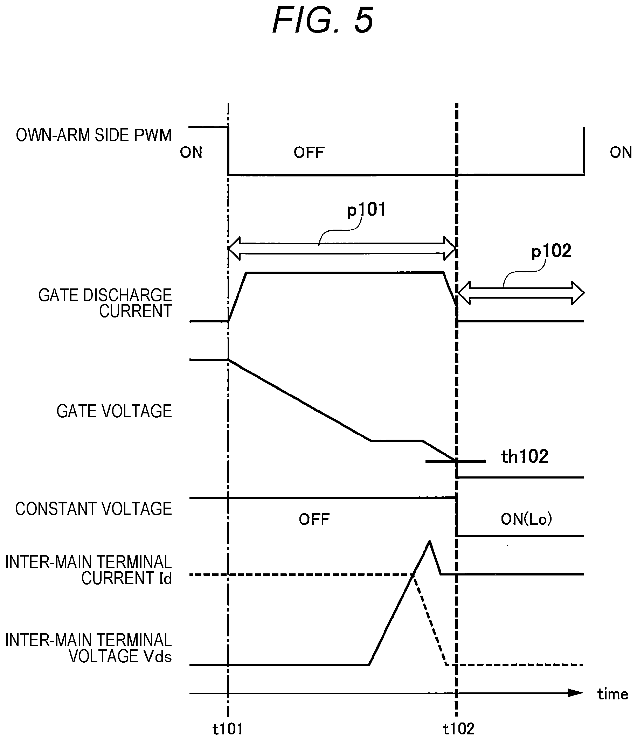

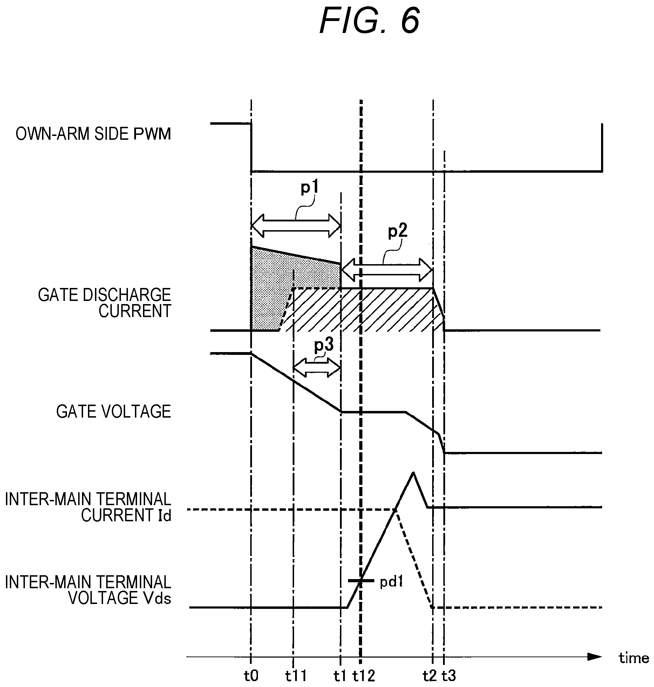

Here, a difference in operation between the conventional gate drive device and the gate drive device according to the first embodiment will be described with reference to FIGS. 5 and 6. The gate drive device disclosed in Patent Literature 1 described above is referred to as a conventional gate drive device. The conventional gate drive device includes a constant voltage circuit and a constant current circuit.

FIG. 5 is a diagram illustrating an operation example of a conventional gate drive device. FIG. 5 illustrates some of the items of the timing chart illustrated in FIG. 3, and further illustrates the constant voltage ON timing.

The timing chart illustrated in FIG. 5 indicates that the own arm-side PWM is switched from on to off at timing t101. The discharge current discharged from the gate of the semiconductor element driven by the conventional gate drive device is discharged in a constant voltage discharge period p102 in which the discharge is performed by switching to a constant voltage after a constant current discharge period p101 in which the discharge is performed with a constant current.

The gate voltage discharged from the conventional semiconductor element starts decreasing during the constant current discharge period p101 and becomes a constant voltage during the constant voltage discharge period p102. That is, at a time point of timing t102 when the constant current discharge period p101 is switched to the constant voltage discharge period p102, the constant voltage circuit changes the constant voltage from off to on (Lo level). The timing t102 is also a time point when the gate voltage becomes less than a threshold th102.

The discharge current is constant in the constant current discharge period p101, and the inter-main terminal voltage Vds of the semiconductor element driven by the conventional gate drive device increases in the middle of the constant current discharge period p101. On the other hand, the inter-main terminal current Id starts to decrease in the middle of the constant current discharge period p101. As illustrated in FIG. 5, in the conventional gate drive device, there is no overlap period in which a constant voltage and a constant current are used in combination. In addition, the order is discharge with a constant current and then discharge with a constant voltage. As described above, since the operation of the constant current circuit is slow, the turn-off time of the semiconductor element cannot be shortened in the conventional gate drive device.

FIG. 6 is a diagram illustrating an operation example of the gate drive device 501 according to the first embodiment. FIG. 6 is obtained by extracting a part of the timing chart illustrated in FIG. 3.

The timing chart illustrated in FIG. 6 indicates that the own arm-side PWM is switched from on to off at timing t0. When the own-arm side PWM is turned off, a discharge current Ig is generated from the gate 305, and the gate voltage decreases. The inter-main terminal current Id is constant between the timing t0 and the timing t12. The inter-main terminal voltage Vds of the drain and the source of the semiconductor element 301 starts to rise in the vicinity of switching of the discharge current from the constant voltage discharge period p1 to the constant current discharge period p2. That is, in the constant current discharge period p2 after the constant voltage circuit 50 ends the discharging operation in the constant voltage discharge period p1 of the discharge current, the constant current circuit 40 discharges with a constant current. The overlap period p3 in which discharge with a constant voltage and discharge with a constant current are used in combination ends by timing t12 before the inter-main terminal voltage Vds reaches the predetermined value pd1. Therefore, the constant voltage discharge by the constant voltage circuit 50 ends before the inter-main terminal voltage Vds reaches the predetermined value pd1.

In the gate drive device 501 according to the first embodiment, before the constant current circuit 40 of the feedback system with a large delay starts discharging with a constant current, the constant voltage circuit 50 with a small delay starts discharging, that is, pre-discharges, thereby shortening the delay time until the gate 305 starts discharging. Furthermore, the discharge period of the constant voltage circuit 50 overlaps after the start of discharge of the constant current circuit 40, so that the gate 305 is reliably discharged with a constant current at the end of pre-discharge.

The gate drive device 501 solves the problem of the rise delay time by using the high-speed constant voltage circuit 50 in combination until the low-speed constant current circuit 40 rises. In addition, the gate drive device 501 can obtain an effect of reducing the switching loss of the semiconductor element 301 by a constant current. In addition, the gate drive device 501 can suppress a conduction loss until turn-off by shortening a turn-off time of the semiconductor element 301.

Various variations are assumed in the operation of the gate drive device 501. An operation example of the gate drive device 501 will be described below.

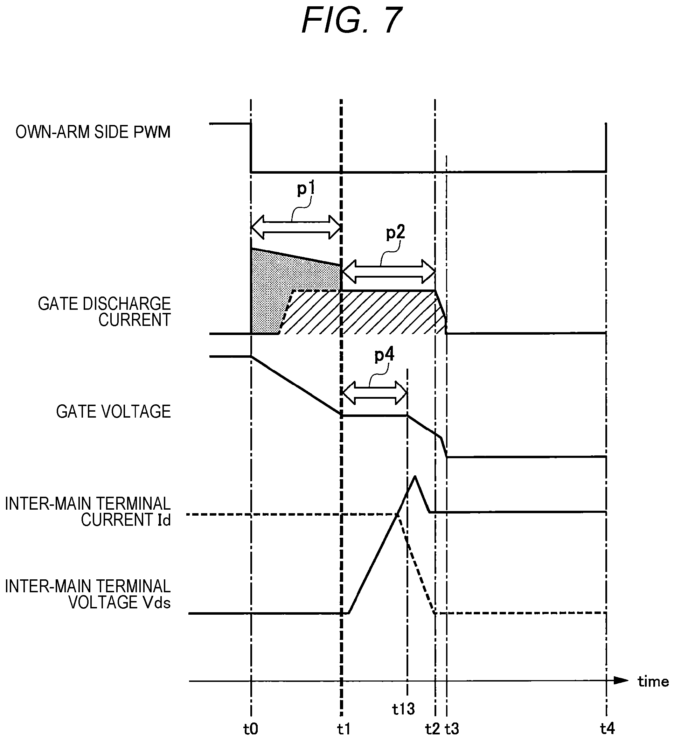

FIG. 7 is a diagram illustrating an example in which the mirror period is used for the operation of the gate drive device 501.

A period during which the gate-driven semiconductor element 301 actually starts switching and the inter-main terminal voltage Vds changes is referred to as a mirror period. In the drawing, a period from timing t1 to timing t13 is defined as a mirror period p4.

The gate drive device 501 ends the pre-discharge operation of the constant voltage circuit 50 before the timing at which the inter-main terminal voltage Vds increases and before the timing t1 at which the mirror period p4 starts. That is, the constant voltage circuit (constant voltage circuit 50) ends the discharging operation before the start of the mirror period (mirror period p4) in which the inter-main terminal voltage Vds of the semiconductor element (semiconductor element 301) rises.

Since the gate drive device 501 ends the constant voltage discharge before the start of the mirror period p4, only the period before the actual start of the switching of the semiconductor element 301 can be shortened, and the discharge with the constant current can be always performed during the switching. Therefore, the gate drive device 501 can obtain stable switching characteristics of the semiconductor element 301 due to the characteristics of constant current discharge and a switching loss reduction effect due to the switching characteristics.

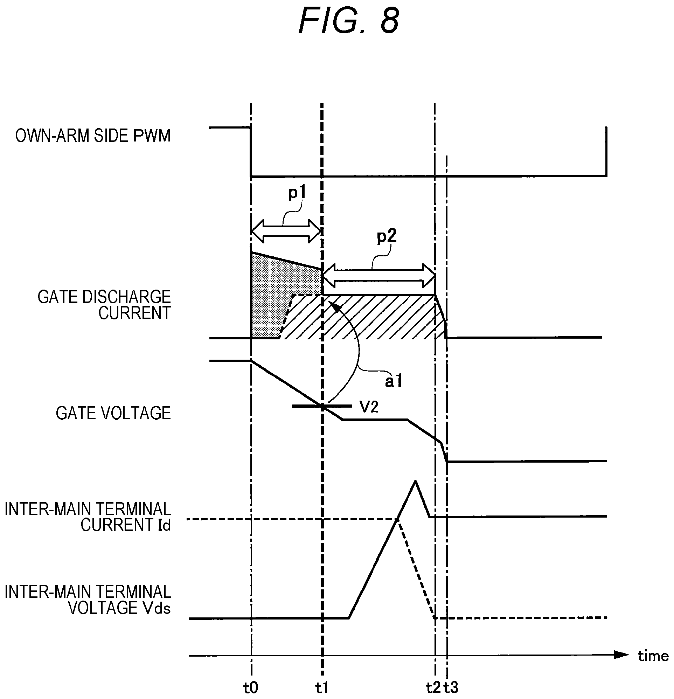

FIG. 8 is a diagram illustrating an example in which the timing t1 at which the constant voltage discharge period p1 is switched to the constant current discharge period p2 is a time point at which the gate voltage becomes less than the gate voltage threshold V2.

The gate voltage of the semiconductor element 301 in the mirror period p4 illustrated in FIG. 7 is determined based on the voltage threshold and the Vgs-Id characteristic set to the gate voltage of the semiconductor element 301 and the output current of the motor driving inverter device (see FIG. 16 described later). The gate voltage of the semiconductor element 301 in the mirror period p4 is lower than the gate voltage (for example, the gate voltage at timing t0) for holding the semiconductor element 301 in the ON state. Therefore, the gate voltage threshold V2 is provided between the gate voltage when the semiconductor element 301 is in the on-state and the gate voltage in mirror period p4. The gate drive device 501 ends the pre-discharge when the gate voltage becomes less than the gate voltage threshold V2.

FIG. 8 illustrates an example in which the gate voltage threshold V2 is set. As described above, timing t1 is a time point at which the gate voltage of the semiconductor element 301 becomes less than the gate voltage threshold V2. An arrow a1 in the drawing indicates that the constant voltage discharge period p1 ends when the gate voltage becomes less than the gate voltage threshold V2. Therefore, the constant voltage discharge period p1 is switched only to the constant current discharge period p2 at the timing t1.

By setting the timing t1 at which the pre-discharge ends based on the gate voltage threshold V2, it is possible to secure a period during which the gate 305 can be discharged with a constant current when the inter-main terminal voltage Vds changes. Therefore, an effect of reducing the switching loss by the constant current circuit 40 is obtained, and the occurrence of a surge due to the constant voltage circuit 50 not being turned off can be suppressed.

In the gate drive device 501 according to the first embodiment described above, until the low-speed constant current circuit 40 rises, the high-speed constant voltage circuit 50 is used in combination, the constant voltage discharge is started first, and then the overlap period p3 in which the constant current discharge is used in combination is provided. In addition, the gate drive device 501 ends the constant voltage discharge first and then ends the constant current discharge. Therefore, the problem of the rise delay time of the constant current circuit 40 can be solved.

In addition, since a combined period of constant voltage driving can be provided at the start of turn-off of the semiconductor element 301, the turn-off time is shortened. As a result, it is possible to shorten the turn-off time of the semiconductor element 301 and suppress the conduction loss until the turn-off while obtaining the switching loss reduction effect by the constant current. In addition, the gate drive device 501 can improve PWM controllability with an inexpensive configuration.

[Second Embodiment]

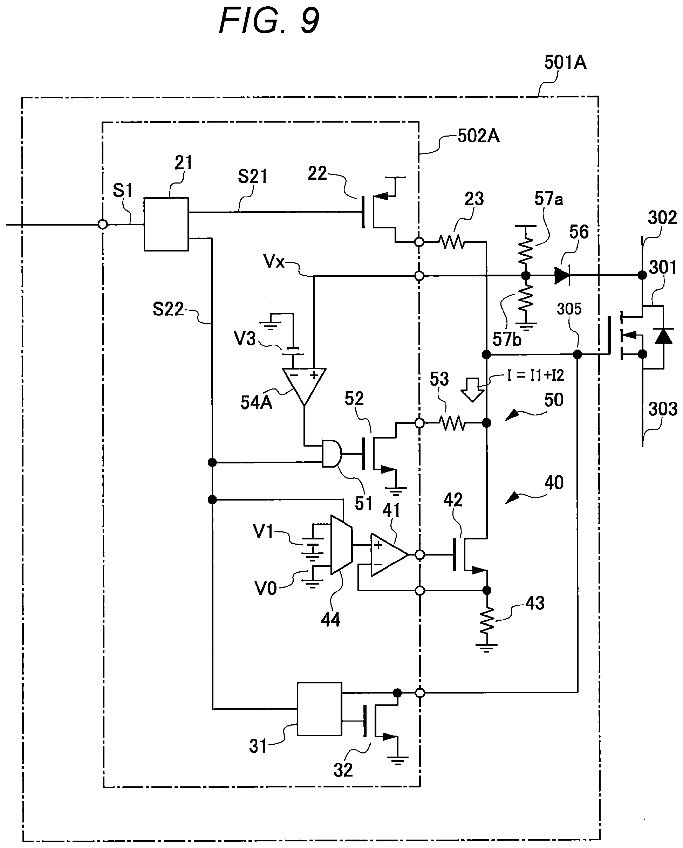

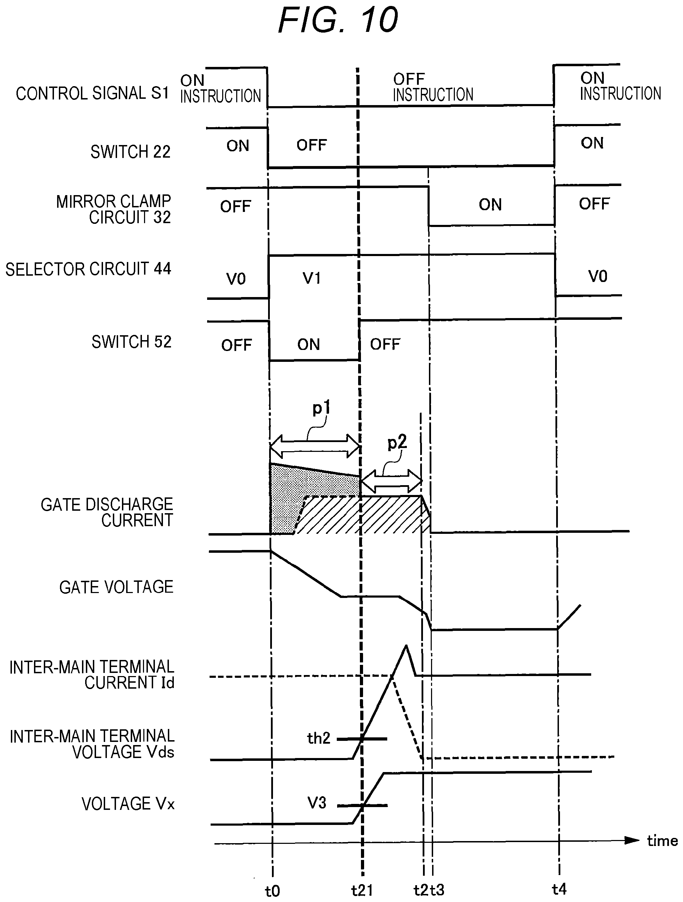

Next, a configuration example and an operation example of a gate drive device according to a second embodiment of the present invention will be described with reference to FIGS. 9 and 10. In the gate drive device according to the second embodiment, the constant voltage discharge of the gate is stopped when the inter-main terminal voltage becomes equal to or higher than the inter-main terminal voltage threshold.

FIG. 9 is a diagram illustrating an overall configuration example of a gate drive device 501A according to the second embodiment.

The gate drive device 501A includes a semiconductor integrated circuit 502A according to the second embodiment. The semiconductor integrated circuit 502A is an example of a semiconductor integrated circuit for realizing the gate drive device 501A. Circuits other than the semiconductor integrated circuit 502A included in the gate drive device 501A are similar to those of the gate drive device 501 according to the first embodiment illustrated in FIG. 1, and thus detailed description thereof is omitted. The gate drive device 501A is different from the gate drive device 501 according to the first embodiment in that it includes a diode 56, a resistor 57a, and a resistor 57b.

A cathode of the diode 56 is connected to a drain terminal 302 of the semiconductor element 301. An anode of the diode 56 is connected to the midpoint between the resistor 57a and the resistor 57b and the non-inverting input terminal of a comparator 54A. The diode 56, the resistor 57a, and the resistor 57b are interfaces for connecting the inter-main terminal voltage Vds of the semiconductor element 301 to the diode 56, and limit the maximum value of the input voltage so that the voltage level of the battery (not illustrated) is not directly applied to the comparator 54A.

The anode of the diode 56 is connected to one input terminal (non-inverting input terminal) of the comparator 54A, and a threshold voltage V3 is input to the other input terminal (inverting input terminal). The comparator 54A compares a voltage Vx supplied from the drain terminal 302 with the gate voltage threshold V3 input from the other input terminal, and outputs a positive voltage to the control circuit 51 when the voltage Vx becomes equal to or higher than the threshold voltage V3.

FIG. 10 is a timing chart illustrating an example of operation timing in each unit of the gate drive device 501A according to the second embodiment.

The switch 52 is turned off when the control signal S1 is an ON instruction. Thereafter, when the control signal changes from the on instruction to the off instruction at timing t0, the switch 52 is turned on from off. The switch 52 is turned off from on when the control signal S1 is an off instruction and when the voltage Vx becomes equal to or higher than the threshold voltage V3. A time point when the switch 52 is turned off from on is set as timing t21.

The timing t21 is also a time point when the voltage Vx becomes equal to or higher than the threshold voltage V3 and the inter-main terminal voltage Vds becomes equal to or higher than the inter-main terminal voltage threshold th2 after the inter-main terminal voltage Vds of the semiconductor element 301 starts to rise. The constant voltage circuit (constant voltage circuit 50) ends the discharging operation when the inter-main terminal voltage Vds of the semiconductor element (semiconductor element 301) becomes equal to or higher than the inter-main terminal voltage threshold th2.

Next, from timing t21 to timing t2, the inter-main terminal voltage Vds transitions due to discharge with a constant current by the constant current circuit 40. As a result, the effect of reducing the switching loss can also be obtained in the gate drive device 501A according to the second embodiment.

In the gate drive device 501A according to the second embodiment described above, the turn-off switching of the semiconductor element 301 is actually started, and the pre-discharge is ended when it is detected that the inter-main terminal voltage Vds starts to rise. For this reason, the gate drive device 501A can perform high-speed rising with low loss although there is variation due to the combined effect of the constant current circuit and the pre-discharge until the middle of the switching. In addition, since the gate drive device 501A performs a stable switching operation with a constant current after completion of the pre-discharge, it is possible to reduce the switching loss to the maximum while suppressing the generation of the surge.

[Third Embodiment]

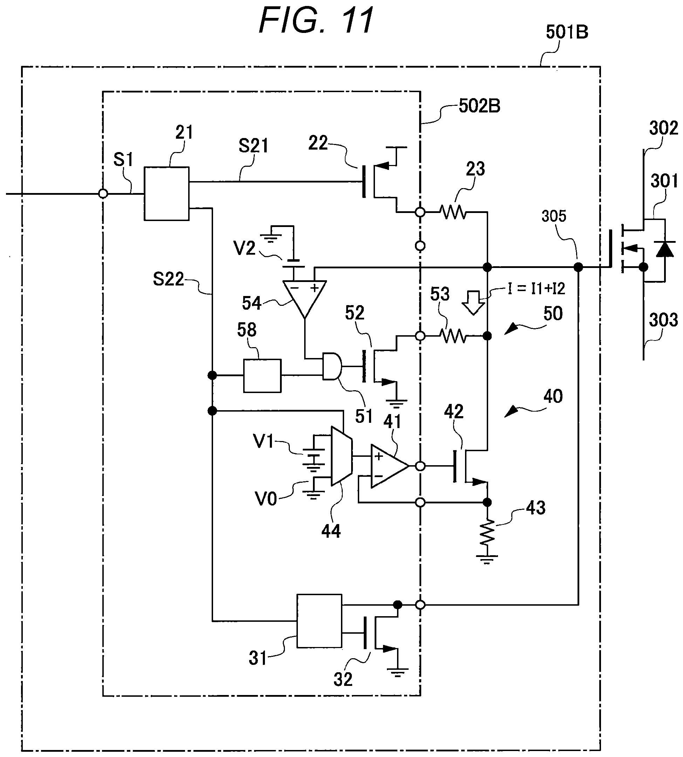

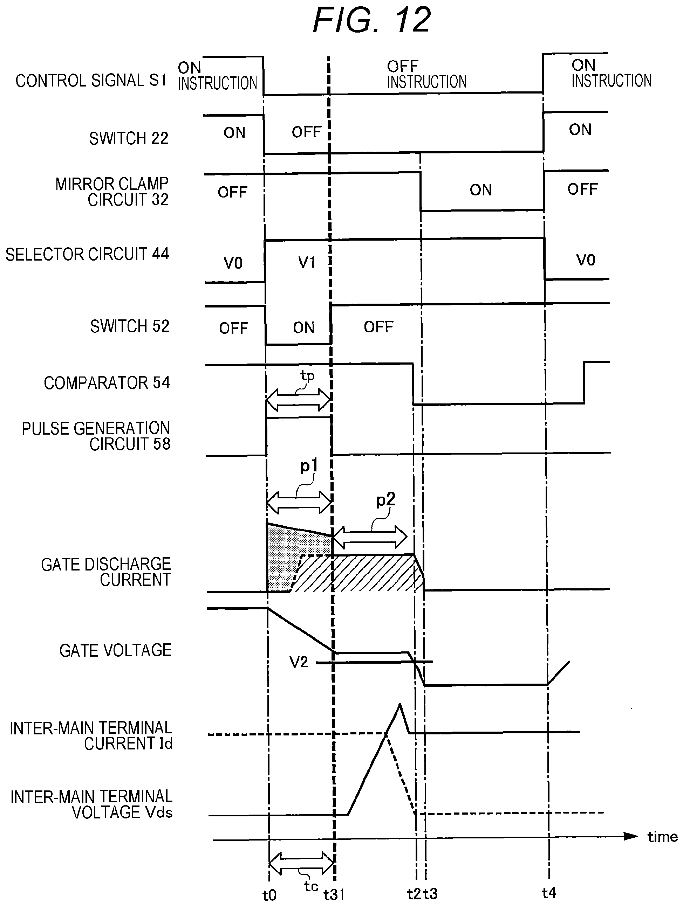

Next, a configuration example and an operation example of a gate drive device according to a third embodiment of the present invention will be described with reference to FIGS. 11 and 12. In the gate drive device according to the third embodiment, the constant voltage discharge of the gate is stopped before the gate voltage becomes less than the voltage threshold V2.

FIG. 11 is a diagram illustrating an overall configuration example of a gate drive device 501B according to the third embodiment.

The gate drive device 501B includes a semiconductor integrated circuit 502B according to the second embodiment. The semiconductor integrated circuit 502B is an example of a semiconductor integrated circuit for realizing the gate drive device 501B. Circuits other than the semiconductor integrated circuit 502B included in the gate drive device 501B are similar to those of the gate drive device 501 according to the first embodiment illustrated in FIG. 1, and thus detailed description thereof is omitted.

The semiconductor integrated circuit 502B includes a pulse generation circuit 58 on one input side of the control circuit 51, that is, an input side different from a side to which the output of the comparator 54 is input. The pulse generation circuit 58 receives a control signal S22 from the control circuit 21. When the control signal S22 is switched from the OFF instruction to the ON instruction, the pulse generation circuit 58 generates a pulse having a predetermined time width tp illustrated in FIG. 12 to be described later. The pulse generated by the pulse generation circuit 58 is input to the control circuit 51. The constant voltage circuit (constant voltage circuit 50) ends the discharging operation when a certain time (certain time tc) elapses after the start of the discharging operation.

When receiving the output of the comparator 54 and the pulse of the pulse generation circuit 58 at the same time, the control circuit 51 turns on the switch 52. The switch 52 is turned off when the control signal S1 is an ON instruction. In addition, the switch 52 is turned on at timing t0 when the control signal S1 is switched from the on instruction to the off instruction. On the other hand, the switch 52 is turned off when the gate voltage becomes less than the gate voltage threshold V2 or when a certain time tc elapses after the switch 52 is turned on. The certain time tc is equal to the predetermined time width tp or longer than the predetermined time width tp, but is set so as not to be excessively long.

FIG. 12 is a timing chart illustrating an example of operation timing in each unit of the gate drive device 501B according to the third embodiment. In FIG. 12, the operation timing of the pulse generation circuit 58 is added to the timing chart illustrated in FIG. 3.

A time point when a certain period of time tc has elapsed after the switch 52 is turned on is defined as timing t31. The semiconductor integrated circuit 502B turns off the switch 52 even if the gate voltage is not less than the threshold voltage V2 at timing t31. Therefore, in addition to the end operation of the constant voltage discharge according to the first and second embodiments described above, the constant voltage circuit 50 ends the discharging operation with the constant voltage also when a certain time tc has elapsed after the start of the discharging operation. The processing in which the constant voltage circuit 50 ends the discharging operation when the certain time tc has elapsed after the start of the discharging operation is used together with the processing in which the gate drive devices according to the first and second embodiments end the discharging operation.

In the gate drive device 501B according to the third embodiment described above, the constant voltage discharge is ended even when the constant time tc has elapsed from the start of the operation of the constant voltage circuit 50. For example, even when the gate voltage becomes abnormally high due to a failure of the semiconductor integrated circuit 502B or the like, the switch 52 is turned off when a certain time tc has elapsed after being turned on. Therefore, the switching element is safely stopped without destroying the switching element such as the switch 52.

The processing of stopping the constant voltage discharge when the inter-main terminal voltage Vds according to the second embodiment becomes equal to or higher than the inter-main terminal voltage threshold th2 (FIG. 10) and the processing of ending the constant voltage discharge when a certain time tc has elapsed from the start of the operation of the constant voltage circuit 50 according to the third embodiment may be combined.

In addition, when an abnormal current exceeding the normal operation range flows, the gate voltage during the mirror period may be higher than the gate voltage threshold V2, or an abnormality may occur in a voltage detection circuit (not illustrated). Even in such a case, the constant voltage discharge of the constant current circuit 40 stops when the certain time tc elapses, so that the surge from the constant voltage circuit 50 can be suppressed.

[Fourth Embodiment]

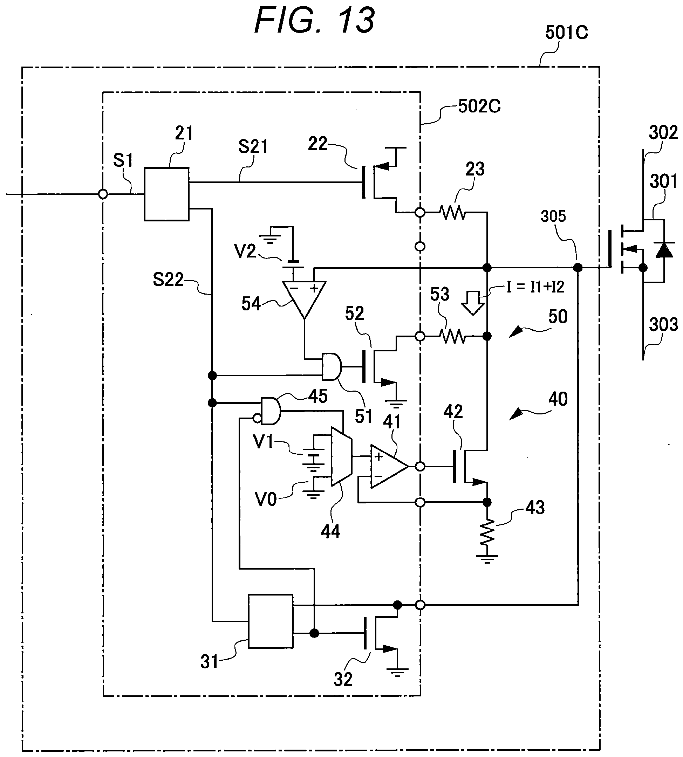

Next, a configuration example and an operation example of a gate drive device according to a fourth embodiment of the present invention will be described with reference to FIGS. 13 to 15.

FIG. 13 is a diagram illustrating an overall configuration example of a gate drive device 501C according to the fourth embodiment.

The gate drive device 501C includes a semiconductor integrated circuit 502C according to the fourth embodiment. The semiconductor integrated circuit 502C is an example of a semiconductor integrated circuit for realizing the gate drive device 501C. Circuits other than the semiconductor integrated circuit 502C included in the gate drive device 501C are similar to those of the gate drive device 501 according to the first embodiment illustrated in FIG. 1, and thus detailed description thereof is omitted.

The semiconductor integrated circuit 502C includes a control circuit 45 that limits a condition under which the selector circuit 44 selects the reference voltage V1. For example, the control circuit 45 includes a logical-path product circuit. The control signal S22 is input to one of the input terminals of the control circuit 45, and the output of the control circuit 31 is inversely input to the other input terminal. In accordance with the output of the control circuit 45, the selector circuit 44 selects the reference voltage V1 when the control signal S1 is an off instruction and the mirror clamp circuit 32 is off. The constant current circuit (constant current circuit 40) ends the discharging operation before the semiconductor element (semiconductor element 301) starts charging the gate (gate 305) next time.

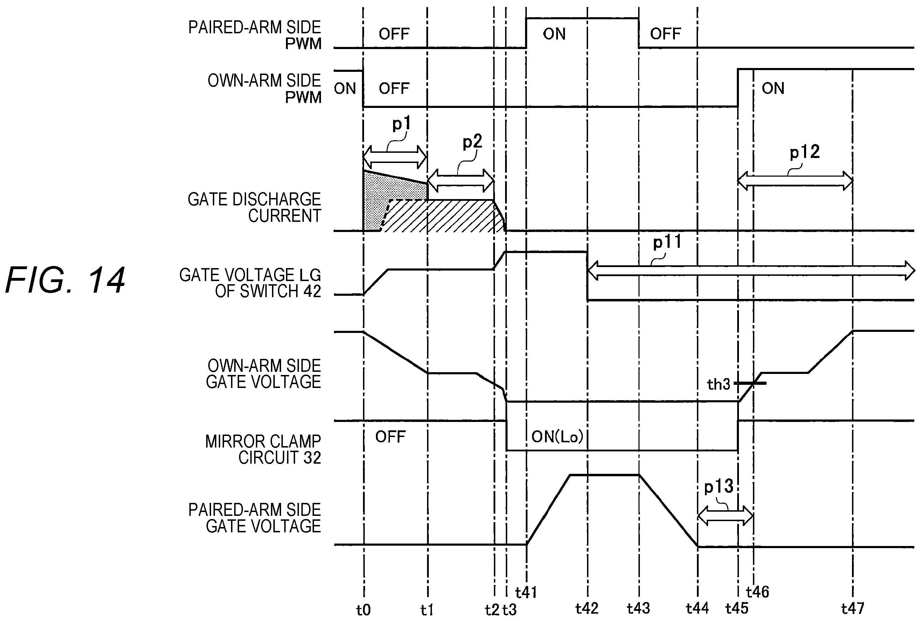

FIG. 14 is a timing chart of the gate drive device 501C. In FIG. 14, timings of the own-arm side PWM, the paired-arm side PWM, the discharge current of the gate, the gate voltage LG of the transistor 42, the own-arm side gate voltage, the mirror clamp circuit 32, and the paired-arm side gate voltage in the gate drive device 501C on the own-arm side illustrated in FIG. 13 are described.

At timing t0, the paired-arm side PWM remains off, and the own-arm side PWM is switched from on to off. The gate voltage LG of the transistor 42 starts increasing. The own-arm side gate voltage (the voltage of the gate 305) decreases. The paired-arm side gate voltage (voltage of the gate of the semiconductor element provided in the paired arm (not illustrated)) does not change.

As described above, the constant voltage discharge and the constant current discharge are performed in the period from timing t0 to timing t3. After timing t3, the paired-arm side PWM is turned on at timing t41. For this reason, the paired-arm side gate voltage starts to increase. At timing t3, the mirror clamp circuit 32 is turned on to reach the ground voltage Lo.

At timing t42, the gate voltage LG of the transistor 42 decreases. The timing t42 is a time point before the charge of the gate is started in the next cycle. The constant current circuit 40 ends the discharging operation before the semiconductor element 301 starts charging the gate next time. After timing t42, the transistor 42 is in a state of completion of the discharging operation (gate off). The state of the end of the discharging operation (gate off) continues for a period p11.

At timing t43, the paired-arm side PWM is switched from on to off, and the paired-arm side gate voltage starts to decrease. Thereafter, a time point at which the paired-arm side gate voltage completely decreases is defined as timing t44. After timing t44, at timing t45, the own-arm side PWM is turned on, and the mirror clamp circuit 32 is turned off. In addition, the own-arm side gate voltage starts to increase. A time point at which the own-arm side gate voltage exceeds a voltage threshold th3 is defined as timing t46. From timing t44 to timing t46, neither the own-arm side semiconductor element 301 nor the other-arm side semiconductor element (not illustrated) substantially operates, and thus, the period from timing t44 to timing t46 is referred to as a dead time period p13.

After timing t46, a time point at which the own-arm side gate voltage reaches the maximum value is defined as timing t47. A period from timing t45 at which the own-arm side gate voltage starts increasing to timing t47 at which the own-arm side gate voltage reaches a maximum value is referred to as a turn-on time p12. The turn-on time p12 represents a time required for the own-arm side semiconductor element 301 to substantially operate.

In the gate drive device 501C according to the fourth embodiment described above, the current path of the constant current circuit 40 is cut off until the start of the next gate charging (timing t46). Therefore, the turn-on time p12 and the dead time period p13 of the semiconductor element 301 in the next cycle are shortened, and the loss during the dead time can be reduced.

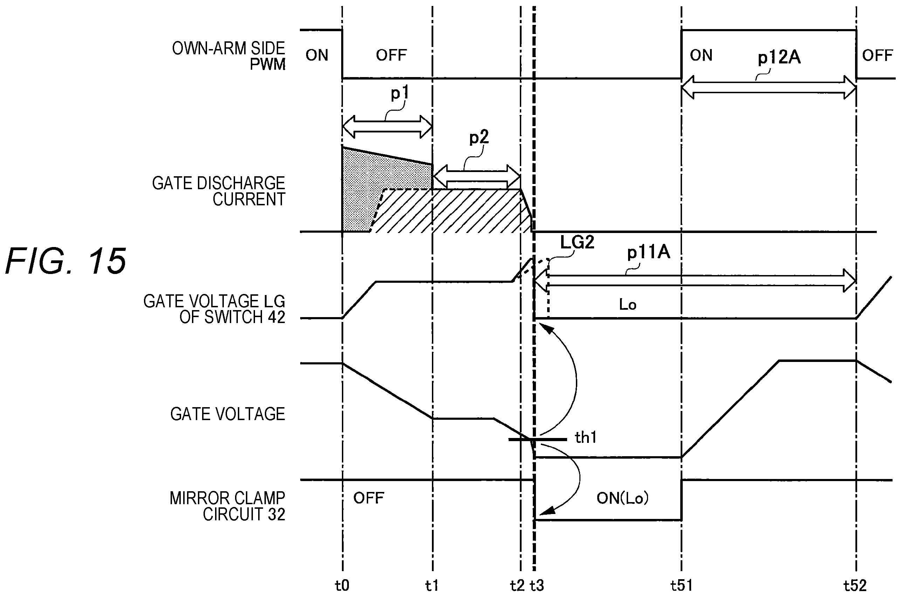

FIG. 15 is a modification of the timing chart illustrated in FIG. 14.

The gate voltage LG of the transistor 42 drops at timing t3 immediately after the end of the constant current discharge which is the discharge current of the gate. The gate voltage LG may drop after the timing t3 as indicated by a broken line LG2. As illustrated in FIG. 3, timing t3 is timing at which the gate voltage becomes less than the gate voltage threshold th1. That is, at timing t3 when the gate voltage becomes less than the gate voltage threshold th1, the drop of the gate voltage LG of the transistor 42 is started, and the mirror clamp circuit 32 is turned on from off.

The mirror clamp circuit (mirror clamp circuit 32) holds the gate voltage at the low level when the gate voltage of the semiconductor element (semiconductor element 301) becomes less than the gate voltage threshold (gate voltage threshold th1). The mirror clamp circuit 32 is turned off at timing t51 when the own-arm side PWM is turned on. The constant current circuit (constant current circuit 40) ends the discharging operation in accordance with the start of the operation of the mirror clamp circuit (mirror clamp circuit 32).

In FIG. 15, a turn-on time p12A of the own-arm side semiconductor element 301 is a period from when the own-arm side PWM is turned on at timing t51 to when it is turned off at timing t52. Therefore, the turn-on time p12A continues until the gate voltage starts to drop after the gate voltage reaches the maximum value. A gate-off period p11A in which the gate is turned off after the discharging operation of the gate ends is a period from timing t3 to timing t52. Since the constant current circuit 40 ends the discharging operation after the start of the operation of the mirror clamp circuit 32, it is possible to reliably cut off the current path of the constant current circuit 40 before the start of the next gate charging.

[Fifth Embodiment]

Next, a configuration example and an operation example of a power conversion device including the gate drive device according to the first to fourth embodiments of the present invention will be described with reference to FIG. 16.

FIG. 16 is a diagram illustrating an overall configuration example of a motor-driving inverter device 200. The motor-driving inverter device 200 is an example of a power conversion device according to a fifth embodiment. A power conversion device (motor-driving inverter device 200) includes a gate drive device (gate drive device 501) that drives a gate-driven semiconductor element (semiconductor element 301), and converts power to be supplied to a load (motor 900) according to an operation of the semiconductor element (semiconductor element 301).

The motor-driving inverter device 200 includes, as main components, a current sensor 201, a motor control controller 210, a gate driver circuit 220, a voltage sensor 230, a voltage smoothing capacitor 240, and a power semiconductor module 300. The motor control controller 210 controls the motor 900. The current sensor 201 monitors the output current of the motor-driving inverter device 200. The voltage smoothing capacitor 240 is input to the motor-driving inverter device 200 and smooths the applied voltage that fluctuates at the time of power conversion. The power semiconductor module 300 is a power semiconductor device in which a plurality of semiconductor elements 301 are modularized.

A battery 901 and a contactor 902 are connected to the motor-driving inverter device 200. The contactor 902 controls connection or disconnection between the motor-driving inverter device 200 and the battery 901.

When a host controller (not illustrated) gives a command for driving the motor, such as a torque or a rotation command, to the motor control controller 210, the motor control controller 210 gives a PWM signal corresponding to the command to the gate driver circuit 220. The gate driver circuit 220 performs switching control of the power semiconductor module 300 according to the PWM signal. The motor-driving inverter device 200 has a function of converting a DC voltage supplied from the battery 901 into an AC voltage for driving the motor 900 in a state where the contactor 902 is turned on by switching control of the power semiconductor module 300.

In the gate driver circuit 220, a gate drive device 501 is provided for each of the plurality of semiconductor elements 301 included in the power semiconductor module 300. Using the above-described timing chart and the like, the gate drive device 501 focusing on the timing operation is referred to as an own-arm side gate drive device 501_1. The gate drive device 501 used as a pair for the own-arm side gate drive device 501_1 is referred to as a paired-arm side gate drive device 501_2. The gate driver circuit 220 is provided with a power source 510 that supplies a drive voltage to the motor control controller 210.

The motor-driving inverter device 200 is provided with a voltage sensor 230 including a plurality of resistors as a component for safety measures. The voltage divided by the voltage sensor 230 is input to the motor control controller 210, and the voltage is monitored. The motor-driving inverter device 200 controls the torque and the rotation speed of the motor 900 based on information of a motor-driving rotation sensor 910, a current sensor 20, and a voltage sensor 10. After the motor 900 is driven, when the contactor 902 is turned off by a command from the host controller, the motor-driving inverter device 200 is electrically disconnected from the battery 901.

The semiconductor element 301 is divided into an upper-arm semiconductor element 301u and a lower-arm semiconductor element 301d. The motor control controller 210 controls on and off of the upper-arm semiconductor element 301u and the lower-arm semiconductor element 301d through the gate driver circuit 220. The voltage smoothing capacitor 240 absorbs voltage ripples generated at the time of switching control of the upper-arm semiconductor element 301u and the lower-arm semiconductor element 301d.

The motor-driving inverter device 200 according to the fifth embodiment described above includes the gate drive device according to the first to fourth embodiments, thereby improving the power efficiency in the power semiconductor module 300. In addition, it is also possible to reduce the loss at the time of switching of the upper-arm semiconductor element 301u and the lower-arm semiconductor element 301d of the power semiconductor module 300. Therefore, the power efficiency of the entire motor-driving inverter device 200 can be improved.

In addition, the present invention is not limited to the above-described embodiments, and it goes without saying that various other application examples and modifications can be taken without departing from the gist of the present invention described in the claims.

For example, the above-described embodiments have described the configurations specifically and in detail for easy understanding of the present invention, and the present invention is not necessarily limited to those having all the described components. In addition, a part of the configuration of the embodiment described here can be replaced with the configuration of another embodiment, and furthermore, the configuration of another embodiment can be added to the configuration of an embodiment. In addition, a part of the configuration of each embodiment may be added, deleted, or replaced with another configuration.

In addition, the control lines and the information lines indicate what is considered to be necessary for the description, and do not necessarily indicate all the control lines and the information lines necessary for the implementation. In practice, it may be considered that almost all the components are mutually connected.

Reference Signs List

| | |
|---|---|
| 21 | control circuit |
| 22 | switch |
| 32 | mirror clamp circuit |
| 40 | constant current circuit |
| 50 | constant voltage circuit |
| 301 | semiconductor element |
| 305 | gate |
| 501 | gate drive device |
| 502 | semiconductor integrated circuit |

**Claims**

1.   A gate drive device for driving a gate-driven semiconductor element, the gate drive device comprising:

a constant voltage circuit that discharges a gate of the semiconductor element with a constant voltage and ends a discharging operation before an inter-main terminal voltage of the semiconductor element reaches a predetermined value; and
a constant current circuit that starts discharging the gate with a constant current after the constant voltage circuit starts discharging with a constant voltage, and continuously discharges the gate with a constant current even after the constant voltage circuit ends the discharging operation.

2. The gate drive device according to claim 1, wherein
the constant voltage circuit ends the discharging operation before a mirror period in which the inter-main terminal voltage of the semiconductor element rises starts.

3. The gate drive device according to claim 1, wherein
the constant voltage circuit ends the discharging operation when a gate voltage of the semiconductor element becomes less than a gate voltage threshold.

4. The gate drive device according to claim 2, wherein
the constant voltage circuit ends the discharging operation when a certain period of time has elapsed since the start of the discharging operation.

5. The gate drive device according to claim 1, wherein
the constant voltage circuit ends the discharging operation when the inter-main terminal voltage of the semiconductor element becomes equal to or higher than an inter-main terminal voltage threshold.

6. The gate drive device according to claim 5, wherein
the constant voltage circuit ends the discharging operation when a certain period of time has elapsed since the start of the discharging operation.

7. The gate drive device according to claim 1, wherein
the constant current circuit ends the discharging operation before the semiconductor element starts charging the gate next time.

8. The gate drive device according to claim 1, further comprising

a mirror clamp circuit that holds the gate voltage at a low level when the gate voltage of the semiconductor element becomes less than a gate voltage threshold, wherein
the constant current circuit ends the discharging operation in accordance with the start of the operation of the mirror clamp circuit.

9. A power conversion device, comprising a gate drive device that drives a gate-driven semiconductor element and converting power to be supplied to a load according to an operation of the semiconductor element, wherein
the gate drive device includes:

a constant voltage circuit that discharges a gate of the semiconductor element with a constant voltage and ends a discharging operation before an inter-main terminal voltage of the semiconductor element reaches a predetermined value; and
a constant current circuit that starts discharging the gate with a constant current after the constant voltage circuit starts discharging with a constant voltage, and continuously discharges the gate with a constant current even after the constant voltage circuit ends the discharging operation.

# FIG. 1

# FIG. 2

$Ig = I1+I2$

## FIG. 3

CONTROL SIGNAL S1 — ON INSTRUCTION — OFF INSTRUCTION — ON INSTRUCTION

SWITCH 22 — ON — OFF — ON

MIRROR CLAMP CIRCUIT 32 — OFF — ON — OFF

SELECTOR CIRCUIT 44 — V0 — V1 — V0

SWITCH 52 — OFF — ON — OFF

GATE DISCHARGE CURRENT — p1 — p2

GATE VOLTAGE — p3 — V2 — th1

INTER-MAIN TERMINAL CURRENT Id

INTER-MAIN TERMINAL VOLTAGE Vds — pd1

time

t0 — t11 — t1 — t12 — t2 t3 — t4

FIG. 4

# FIG. 5

# FIG. 6

OWN-ARM SIDE PWM

p1

p2

GATE DISCHARGE CURRENT

p3

GATE VOLTAGE

INTER-MAIN TERMINAL CURRENT Id

INTER-MAIN TERMINAL VOLTAGE Vds

pd1

time

t0   t11   t1 t12   t2 t3

# FIG. 7

OWN-ARM SIDE PWM

p1

p2

GATE DISCHARGE
CURRENT

p4

GATE VOLTAGE

INTER-MAIN TERMINAL
CURRENT Id

INTER-MAIN TERMINAL
VOLTAGE Vds

time

t13

t0          t1          t2 t3          t4

EP 4 787 693 A1

# FIG. 8

OWN-ARM SIDE PWM

p1

p2

GATE DISCHARGE CURRENT

a1

GATE VOLTAGE

V2

INTER-MAIN TERMINAL CURRENT Id

INTER-MAIN TERMINAL VOLTAGE Vds

time

t0   t1   t2 t3

20

# FIG. 9

## FIG. 10

| | | | | |
|---|---|---|---|---|
| CONTROL SIGNAL S1 | ON INSTRUCTION | | OFF INSTRUCTION | ON INSTRUCTION |
| SWITCH 22 | ON | OFF | | ON |
| MIRROR CLAMP CIRCUIT 32 | OFF | | ON | OFF |
| SELECTOR CIRCUIT 44 | V0 | V1 | | V0 |
| SWITCH 52 | OFF | ON | OFF | |

GATE DISCHARGE CURRENT

p1

p2

GATE VOLTAGE

INTER-MAIN TERMINAL CURRENT Id

INTER-MAIN TERMINAL VOLTAGE Vds

th2

VOLTAGE Vx

V3

time

t0    t21    t2 t3    t4

22

# FIG. 11

# FIG. 12

| CONTROL SIGNAL S1 | ON INSTRUCTION | OFF INSTRUCTION | ON INSTRUCTION |
|---|---|---|---|
| SWITCH 22 | ON | OFF | ON |
| MIRROR CLAMP CIRCUIT 32 | OFF | ON | OFF |
| SELECTOR CIRCUIT 44 | V0 | V1 | V0 |
| SWITCH 52 | OFF | ON | OFF |
| COMPARATOR 54 | | | |
| PULSE GENERATION CIRCUIT 58 | tp | | |
| GATE DISCHARGE CURRENT | p1 | p2 | |
| GATE VOLTAGE | | V2 | |
| INTER-MAIN TERMINAL CURRENT Id | | | |
| INTER-MAIN TERMINAL VOLTAGE Vds | | | |

time

tc

t0  t31  t2 t3  t4

# FIG. 13

FIG. 14

PAIRED-ARM SIDE PWM

OWN-ARM SIDE PWM

GATE DISCHARGE CURRENT

GATE VOLTAGE LG OF SWITCH 42

OWN-ARM SIDE GATE VOLTAGE

MIRROR CLAMP CIRCUIT 32

PAIRED-ARM SIDE GATE VOLTAGE

OFF    ON    OFF

ON    OFF    ON

p1    p2    p12

p11

th3

OFF    ON(Lo)

p13

t0    t1    t2 t3    t41    t42    t43    t44    t45    t46    t47

EP 4 787 693 A1

26

# FIG. 15

OWN-ARM SIDE PWM | ON | OFF | ON | p12A | OFF

p1

p2

GATE DISCHARGE CURRENT

GATE VOLTAGE LG OF SWITCH 42

LG2 | p11A | Lo

GATE VOLTAGE

th1

MIRROR CLAMP CIRCUIT 32 | OFF | ON(Lo)

t0   t1   t2 t3   t51   t52

EP 4 787 693 A1

*FIG. 16*

# INTERNATIONAL SEARCH REPORT

| International application No. |
|---|
| **PCT/JP2023/034703** |

| A. | CLASSIFICATION OF SUBJECT MATTER |
|---|---|

*H02M 1/08*(2006.01)i

FI:   H02M1/08 A

According to International Patent Classification (IPC) or to both national classification and IPC

| B. | FIELDS SEARCHED |
|---|---|

Minimum documentation searched (classification system followed by classification symbols)

H02M1/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2011-166727 A (DENSO CORPORATION) 25 August 2011 (2011-08-25)<br>entire text, all drawings | 1-9 |
| A | JP 2012-130133 A (DENSO CORPORATION) 05 July 2012 (2012-07-05)<br>entire text, all drawings | 1-9 |
| A | JP 2017-184519 A (RENESAS ELECTRONICS CORPORATION) 05 October 2017<br>(2017-10-05)<br>entire text, all drawings | 1-9 |
| A | JP 2009-54639 A (HITACHI, LTD.) 12 March 2009 (2009-03-12)<br>entire text, all drawings | 1-9 |
| A | JP 2012-147671 A (MITSUBISHI ELECTRIC CORPORATION) 02 August 2012<br>(2012-08-02)<br>entire text, all drawings | 1-9 |
| A | US 2020/0162073 A1 (GENERAL ELECTRIC COMPANY) 21 May 2020 (2020-05-21)<br>entire text, all drawings | 1-9 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034703**

| Patent document cited in search report | | | Publication date (day/month/year) | Patent family member(s) | | | Publication date (day/month/year) |
|---|---|---|---|---|---|---|---|
| JP | 2011-166727 | A | 25 August 2011 | US 2011/0169475 A1 entire text, all drawings | | | |
| JP | 2012-130133 | A | 05 July 2012 | US 2012/0146613 A1 entire text, all drawings CN 102545556 A | | | |
| JP | 2017-184519 | A | 05 October 2017 | US 2017/0288597 A1 entire text, all drawings CN 107272478 A | | | |
| JP | 2009-54639 | A | 12 March 2009 | (Family: none) | | | |
| JP | 2012-147671 | A | 02 August 2012 | (Family: none) | | | |
| US | 2020/0162073 | A1 | 21 May 2020 | JP 2020-89252 A entire text, all drawings EP 3654531 A1 CN 111200424 A | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009011049 A